# EUROPEAN PATENT SPECIFICATION

(11) **EP 1 655 186 B1**
(45) Date of publication and mention of the grant of the patent: **31.12.2008**
(21) Application number: 05023899.7
(22) Date of filing: 02.11.2005
(51) Int. Cl.: B60R 22/03

(54) **Tongue retrieval system and a seatbelt apparatus using the same**
Steckzungenentnahmesystem und Sitzgurtvorrichtung mit Verwendung derselben
Système de présentation d'une languette et dispositif de ceinture de sécurité l'utilisant

(30) Priority: 05.11.2004 JP 2004322218
(43) Date of publication of application: 10.05.2006
(73) Proprietor: TAKATA CORPORATION, Minato-ku, Tokyo 106-8510 (JP)
(72) Inventor: Sugiyama, Tadashi, Minato-ku Tokyo 106-8510 (JP); Nanbu, Masashi, Minato-ku Tokyo 106-8510 (JP)
(74) Representative: Banzer, Hans-Jörg

(56) References cited:
- DE-A1- 10 055 843
- DE-A1- 10 314 464
- US-A1- 2003 075 914
- US-A1- 2004 217 583

## Description

The present invention relates to a seatbelt apparatus installed in a motor vehicle such as an automobile and fastens and protects an occupant by a seatbelt, and relates to a tongue retrieval system to assist the occupant in retrieving a tongue supported by the seatbelt and latched with a buckle fixed to a body of a vehicle, or the like, and the seatbelt apparatus using the tongue retrieval system.

Conventionally, seatbelt apparatuses attached to a seat of motor vehicles such as an automobile, or the like are provided for protecting an occupant by fastening the occupant with a seatbelt so as to prevent the occupant from being thrown out of the seat in an emergency due to great deceleration experienced by the motor vehicle because of a collision or the like.

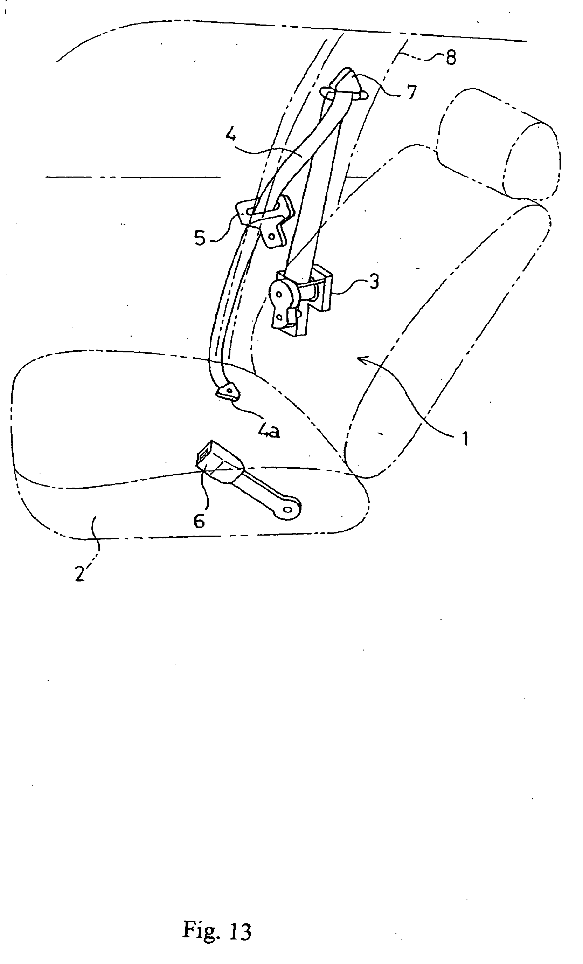

As one conventional seatbelt apparatus, for example, a three-point-type seatbelt apparatus, as shown in FIG. 13, is known. In FIG. 13, reference numeral 1 denotes the seatbelt apparatus installed in a motor vehicle seat 2. Reference numeral 3 denotes a seatbelt retractor 3, fixed to a body of a vehicle adjacent to the motor vehicle seat 2, for withdrawably retracting the seatbelt 4 in a normal state, but which does not allow the seatbelt 4 to be withdrawn in an emergency. Reference numeral 5 denotes a tongue, slidably supported by the seatbelt 4. Reference numeral 6 denotes a buckle, fixed to the motor vehicle seat 2 or a body of a vehicle, with which the tongue 5 is latched, and reference numeral 7 denotes a belt guide, attached to an upper part of a side portion of the motor vehicle, such as a center pillar 8 or the like, guiding the seatbelt 4 withdrawn from the seatbelt retractor 3. In addition, a belt anchor portion 4a of the tip end of the seatbelt 4 withdrawn from the seatbelt retractor 3 is fixed to the motor vehicle seat 2 or a body of the vehicle.

In the thus configured seatbelt apparatus 1, in a case when the occupant wears the seatbelt 4, the occupant is seated on the motor vehicle seat 2, withdraws the seatbelt 4 from the seatbelt retractor 3, and takes his/her hand off from the tongue 5 after latching the tongue 5 with the buckle 6. The excessively withdrawn seatbelt 4 is then retracted by the seatbelt retractor 3 and slack of the seatbelt 4 is eliminated. The occupant is thus fastened by the seatbelt 4.

Meanwhile, in such a seatbelt apparatus 1, the seatbelt 4 is retracted by the seatbelt retractor 3 with almost no slack when the seatbelt 4 is not worn by the occupant. Accordingly, the seatbelt 4 positioned between the belt guide 7 attached to, for example, the center pillar 8 and the belt anchor portion 4a of the seatbelt 4 fixed to the motor vehicle seat 2 is positioned nearly along the center pillar 8. Therefore, the tongue 5 supported by the seatbelt 4 is positioned adjacent to the center pillar 8.

However, when the tongue 5 is thus positioned, and when the seatbelt 4 is not worn by the occupant while the occupant is seated on the motor vehicle seat 2, the tongue 5 is positioned at a side of, and behind the occupant. As a result, when the occupant seated on the motor vehicle seat 2 tries to take the tongue 5 by hand to put on the seatbelt 4, the occupant is bothered to look behind and is forced to take the tongue 5 in an unstable posture. Consequently, there are problems that the tongue 5 is difficult to be retrieved and a handling operation for the tongue 5 to latch with the buckle 6 is bothersome.

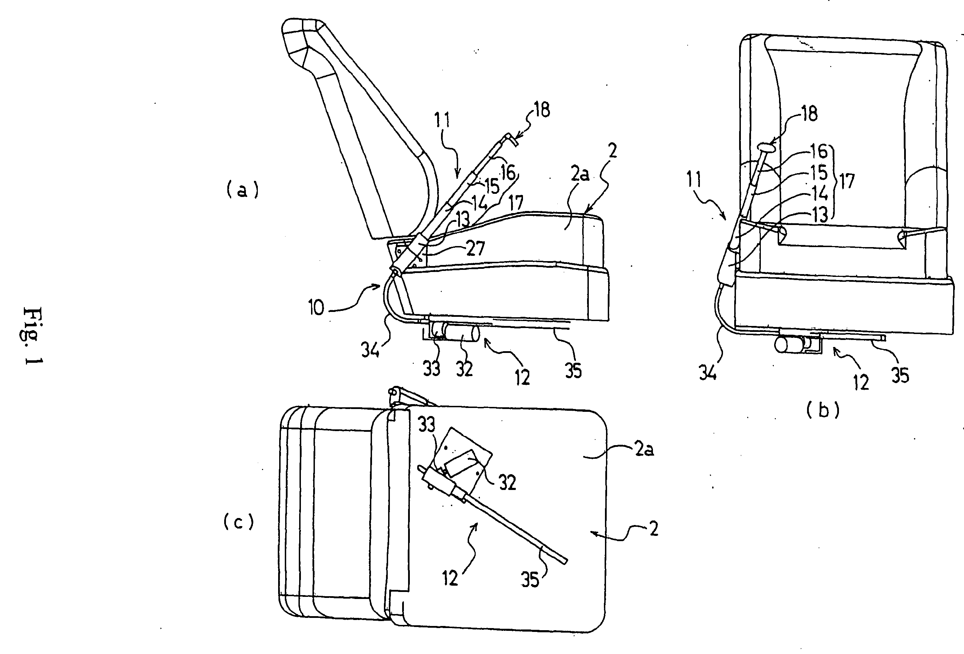

In consideration of the problem mentioned above, a seatbelt presenter apparatus is proposed in, for example, Publication of Japanese Registered Utility Model No. 61-176047 (see, e.g., the Claims of the Utility Model Application and FIG. 1 thereof). In the seatbelt presenter apparatus proposed above, an occupant seated on a motor vehicle seat is enabled to easily take out a tongue and the handling operation of the tongue can be simplified, when the occupant wears the seatbelt.

The seatbelt presenter disclosed in Japanese Registered Utility Model No.61-176047 includes a telescopic-type rod which is retractably provided thereto, a belt hanger portion formed such that a webbing is loosely fit to a tip end of the rod, and a motor to retract the rod. Further, when the occupant takes a ride in a motor vehicle and turns on an ignition switch after closing a door, the rod is extended by a rotation of the motor and the belt hanger portion is protruded forward. As a result, the seat belt loosely fit at the belt hanger portion is also advanced forward and the tongue supported by the seatbelt is thereby guided toward a position within reach of the occupant. When the occupant grips the tongue by hand and inserts the tongue into a buckle to latch with, or even when the occupant does not take out the tongue, the motor is rotated in a reverse direction and the rod is retracted when a predetermined time has elapsed after the belt hanger portion has been disposed to protrude forward.

However, in the seatbelt presenter disclosed in Japanese Registered Utility Model No.61-176047, because the seatbelt is only advanced forward by inducing the belt hanger portion to protrude forward, a tongue does not always reach the position in which it is easy to be retrieved by an occupant by hand. Therefore, when the seatbelt is worn by the occupant, the handling of the tongue is not sufficiently easy for the occupant. In addition, no assured retrieval operation for the tongue is typically achieved. Consequently, it is difficult to easily put on the seatbelt.

Further, when the rod is configured to extend when the occupant takes a ride in a motor vehicle and turns on an ignition switch after closing a door, for example, a passenger, i.e., the occupant seated on a passenger seat is not connected with the extension of the rod. Therefore, when the occupant other than the driver (hereinafter referred to as passenger) takes a seat in the motor vehicle earlier than the driver and tries to put on the seatbelt, the seatbelt is not advanced to a position in front of the passenger and therefore, the easy handling of the tongue for the passenger is not sufficiently performed. In addition, no assured retrieval operation for the tongue is achieved. Consequently, it is therefore further difficult to easily put on the seatbelt.

Furthermore, when the rod is retracted just after the occupant inserts and latches the tongue with the buckle by hand, because the belt hanger portion is still positioned in front of the occupant at a time when the tongue is latched with the buckle, the seatbelt is not set at an appropriate position for the occupant and thereby the occupant may feel discomfort. Moreover, when the rod is retracted when a predetermined time has elapsed after the belt hanger portion is arranged protruding forward, in the case that the occupant is delayed in retrieval operation of the tongue due to a delay in being seated or the like, the seatbelt moves backward even though the occupant has not retrieved the tongue, and the tongue is also positioned behind. Consequently, the easy handling of the tongue for the occupant is not sufficiently performed, and also no assured retrieval operation for the tongue is achieved. As a result, the seatbelt cannot be easily put on.

Furthermore, in a state in which the rod is extended and the belt hanger portion protrudes forward, because the extended rod is positioned at the side adjacent to the occupant, the occupant gets into touch with the rod and a relatively large force can be applied to the rod itself and an attaching portion of the rod.

US 2003/0075914 A1 discloses a seat belt tongue presenter system having the features of the preamble of claim 1.

The present invention is made in light of the above problems, and the object of the invention is to provide a tongue retrieval system capable of automatically transferring a tongue receiving member between a tongue retrieval position and a storing position in order to convey the tongue to the tongue retrieval position, and improving the easiness of handling operation of the tongue and the assuredness of retrieval operation of the tongue performed by the occupant.

Another object of the present invention is to provide a seatbelt apparatus capable of simplifying putting on of the seatbelt by simplifying a handling operation of the tongue, and assuring retrieval operation of the tongue.
According to the present invention, this object is achieved by a tongue retrieval system according to claim 1 and a seatbelt apparatus according to claim 2. The dependent claim defines a preferred embodiment of the invention.

To solve the above-described problems, a tongue retrieval system according to a first embodiment of the present invention is a tongue retrieval system conveying a tongue slidably supported by a seatbelt to a tongue retrieval position set in front of an occupant seated on a motor vehicle seat. The tongue retrieval system includes a tongue receiving member on which the tongue is mounted for conveying the tongue to the tongue retrieval position, a transfer device for transferring the tongue receiving member between a storing position and the tongue retrieval position, a drive device for driving the transfer device, a controller for controlling the drive device, a seating sensor for detecting the occupant seated on the motor vehicle seat and for outputting a seating signal, a door sensor for outputting a door-close signal when the door of a motor vehicle is closed, and a tongue retrieval sensor for outputting a tongue retrieval signal when the tongue is retrieved from the tongue receiving member. The controller controls the drive device such that the transfer device transfers the tongue receiving member from the storing position to the tongue retrieval position on a basis of the seating signal from the seating sensor and the door-close signal from the door sensor, and such that the transfer device transfers the tongue receiving member from the tongue retrieval position to the storing position on the basis of the tongue retrieval signal from the tongue retrieval sensor.

Further, a tongue retrieval system according to a background example which is not an embodiment of the present invention is a tongue retrieval system conveying a tongue slidably supported by a seatbelt to a tongue retrieval position set in front of an occupant seated on a motor vehicle seat. This tongue retrieval system includes a tongue receiving member on which the tongue is mounted for conveying the tongue to the tongue retrieval position, a transfer device for transferring the tongue receiving member between a storing position and the tongue retrieval position, a drive device for driving the transfer device; a controller for controlling the drive device, a seating sensor for detecting the occupant seated on the motor vehicle seat and for outputting a seating signal, a door sensor for outputting a door-close signal when the door of a motor vehicle is closed, a buckle mounted on the motor vehicle, with which the tongue is inserted and latched, and a buckle switch for outputting a tongue latching signal when the tongue is latched with a buckle. The controller controls the drive device such that the transfer device transfers the tongue receiving member from the storing position to the tongue retrieval position on a basis of the seating signal from the seating sensor and the door-close signal from the door sensor, and such that the transfer device transfers the tongue receiving member from the tongue retrieval position to the storing position on the basis of the tongue latching signal from the buckle switch.

Furthermore, a seatbelt apparatus according to the present invention is a seatbelt apparatus including, at least, a seatbelt for restraining an occupant, a seatbelt retractor mounted on a motor vehicle for constantly biasing the seatbelt in a direction for retracting the seatbelt, a tongue slidably supported by the seatbelt; and a buckle mounted on the motor vehicle with which the tongue is inserted and latched. The seatbelt apparatus includes the tongue retrieval system of any one embodiment of the present invention.

Furthermore, a seatbelt apparatus may include a buckle transfer device for transferring the buckle between a storing position and a using position in which the buckle is latched with the tongue by the occupant, a buckle drive device for driving the buckle transfer device, and a controller for controlling the buckle drive device such that the buckle is transferred from the storing position to the using position in which the buckle is latched with the tongue by the occupant, in conjunction with driving operation of the drive device for driving the transfer device for transferring the tongue, when the drive device for driving the transfer device for transferring the tongue is driven such that the tongue receiving member is transferred from the storing position to the tongue retrieval position.

In the thus configured tongue retrieval system according to any one embodiment, in which the tongue is mounted on a tongue receiving member to be conveyed to a tongue retrieval position when the tongue receiving member is transferred from a storing position to the tongue retrieval position for wearing a seatbelt, an occupant seated on a motor vehicle seat can easily grip the tongue by hand. Therefore, when the seat belt is worn, easiness of the handling operation of the tongue for the occupant is improved, and the tongue is assuredly retrieved.

Further, even when the passenger is seated in the motor vehicle earlier than the driver and tries to wear the seatbelt, the tongue receiving member can be set to the tongue retrieval position and the tongue can be assuredly conveyed to the tongue retrieval position. Accordingly, in comparison with Japanese Registered Utility Model No. 61-176047, easiness of the handling operation of the tongue by the passenger can be improved, and assuredness of retrieving the tongue by the passenger is also improved.

Furthermore, because the transfer device starts operation on the basis of two signals of the door-close signal from the door sensor and the seating signal from the seating sensor, operation of the transfer device can be started only when the occupant is seated on the motor vehicle seat and the door is closed. Thereby, even when the door is opened and closed when the occupant is not seated on the motor vehicle seat the transfer device can be prevented from extending, and even when the occupant, seated on the motor vehicle seat, changes his/her own seating posture for some reason, such as taking things, while the door is closed, the transfer device can also be prevented from extending, resulting in prevention of needless operation of the transfer device.

In particular, according to the tongue retrieval system of the first embodiment of the present invention, in which the transfer device is operated when the occupant takes out the tongue from the tongue receiving member, the tongue receiving member is positioned at the storing position or adjacent to the storing position at a time when the tongue is inserted and latched with a buckle. Accordingly, when the occupant takes off a hand from the tongue after latching the tongue with the buckle, the seatbelt can be adjusted to properly restrain the occupant, thereby preventing the occupant from sensing discomfort.

Moreover, the tongue receiving member cannot be transferred to the storing position behind the motor vehicle seat unless the occupant assuredly takes out the tongue from the tongue receiving member. Thereby, because the occupant is not required to hurryingly retrieve the tongue from the tongue receiving member after being seated on the motor vehicle seat, the easiness of handling operation of the tongue by the occupant can be further improved and operation for retrieving the tongue by the occupant can be assuredly performed.

Furthermore, according to the seatbelt apparatus of the present invention, because the seatbelt can be easily handled and the tongue can be assuredly retrieved by applying the tongue retrieval system of the invention to the seatbelt apparatus, the seatbelt can be easily put on.

Furthermore, according to the seatbelt apparatus having a buckle transfer, in which the buckle is transferred from the storing position to the using position in conjunction with the transferring operation for the tongue receiving member when the tongue receiving member is transferred from the storing position to the tongue retrieval position, both a tongue retrieval assisting device and the buckle do not disturb the occupant when the seatbelt is not used, and the occupant can easily insert the tongue into the buckle and latch the tongue with the buckle when the seatbelt is used.
FIGs. 1(a) through 1(c) are schematic views illustrating an entire embodiment of a tongue retrieval assisting device used in an embodiment of a tongue retrieval system according to the present invention, in which FIG. 1(a) is an illustration showing a motor vehicle seat, looking from left, FIG. 1(b) is an illustration showing the motor vehicle seat looking from front, and FIG. 1(c) is an illustration showing the motor vehicle seat, looking from below;
FIGs. 2(a) and 2(b) are enlarged illustrations showing the tongue retrieval assisting device of the embodiment shown in FIGs. 1(a) through 1(c), looking from left, in which FIG. 2(a) is an illustration showing a rod in a state of being retracted, and FIG. 2(b) is an illustration showing the rod in a state of being extended;
FIG. 3(a) is an illustration showing a tongue receiving portion in a state of being attached to the rod of the embodiment shown in FIGs. 1(a) through 1(c), FIG. 3(b) is a plan view showing the tongue receiving portion, and FIG. 3(c) is a side view showing the tongue receiving portion;
FIG. 4 is a perspective view illustrating a rod attached by rubber-mounts;
FIG. 5 is a view explaining a process by which a tongue receiving plate receives the tongue;
FIG. 6 is a flowchart explaining a motor control of the tongue retrieval system according to an embodiment;
FIG. 7 is a flowchart explaining a motor control of the tongue retrieval system according to background example which is not an embodiment;
FIG. 8 is a perspective view partially showing a tongue retrieval assisting device according to another embodiment of the present invention;
FIG. 9 is a perspective view showing the tongue receiving portion of the embodiment shown in FIG. 8;
FIG. 10 is an illustration showing a state in which a gripping portion of the tongue is mounted on the tongue receiving portion of the embodiment shown in FIG. 8;
FIGs. 11(a) and 11(b) are illustrations showing still another embodiment of the present invention, in which FIG. 11(a) is an illustration showing a state in which a buckle is in the storing position and FIG. 11(b) is an illustration showing a state in which the buckle is in a using position;
FIGs. 12(a) and 12(b) are illustrations showing still another embodiment of the present invention, in which FIG. 12(a) is an illustration showing a state in which the buckle is in a storing position, and FIG. 12(b) is an illustration showing a state in which the buckle is in the using position; and
FIG. 13 is an illustration showing a conventional and commonly used three-point-type seatbelt apparatus.
Hereinbelow, the best mode for carrying out the invention is explained referring to the drawings.

FIGs. 1(a) through 1(c) schematically illustrate an embodiment of an entire tongue retrieval assisting device used in an embodiment of a tongue retrieval system with respect to the present invention. FIG. 1(a) is an illustration of a motor vehicle seat looking from the left; FIG. 1(b) is an illustration of the motor vehicle seat looking from the front; and FIG. 1(c) is an illustration of the motor vehicle seat looking from below. Further, in an explanation of each of the embodiments described below, the same numerals denote the same element in the embodiment explained earlier, and the same numerals denote the same element in the related art, shown in FIG. 13 and described earlier, and a detailed explanation is therefore omitted.
In addition, numerals not shown in the drawings used for the explanation are substituted by the numerals shown in the other drawings.

As illustrated in FIGs. 1(a) through 1(c), the tongue retrieval assisting device 10 in this embodiment is provided with a tongue conveying section 11 disposed at the motor vehicle seat 2 at the left side, which conveys a tongue 5 to a tongue retrieval position, and a drive section 12 that operates the tongue conveying section 11.

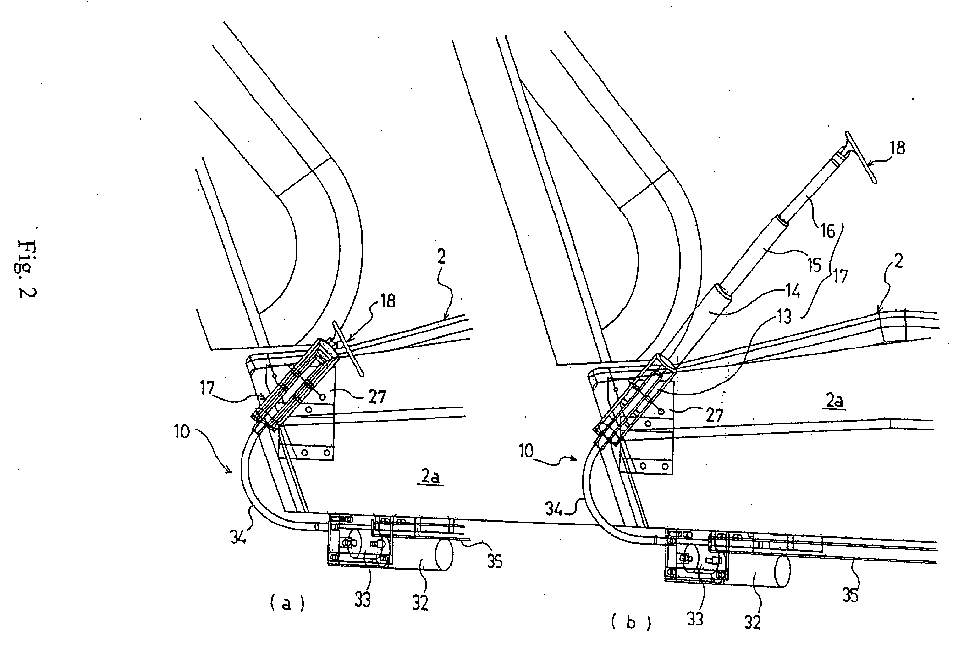

As illustrated in FIGs. 2(a) and 2(b), the tongue conveying section 11 is provided with a rod 17, retractably composed of four cylindrical rod members 13, 14, 15, and 16 in a telescopic structure (corresponding to the transfer device of the present invention) and a tongue receiving member 18 provided at a tip end of a rod member 16 having the minimum diameter of the four cylindrical rod members.

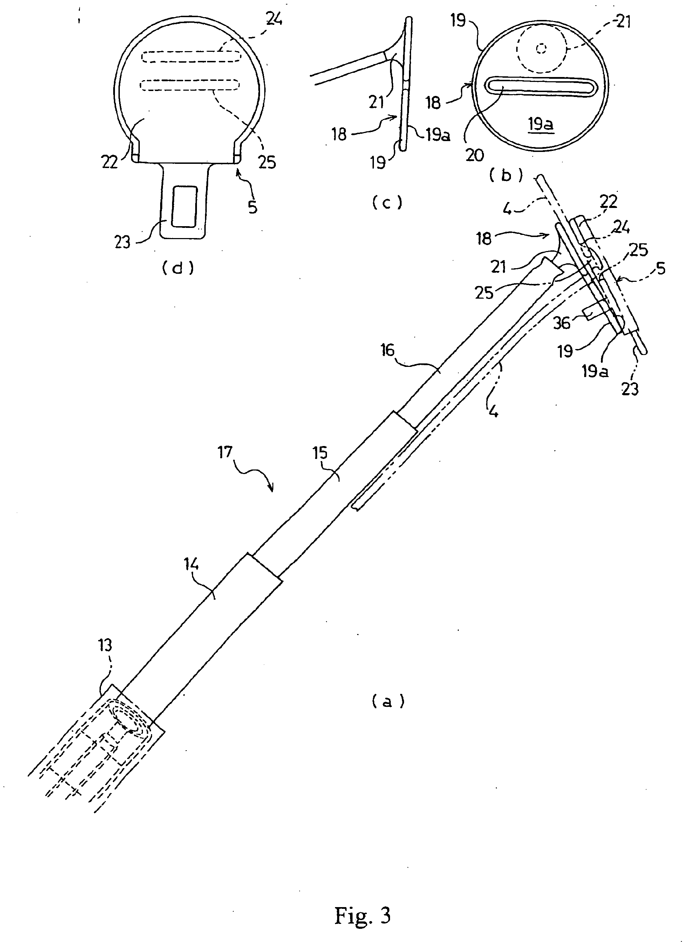

As shown in a magnified view in FIGs. 3(a) through 3(c), the tongue receiving member 18 includes a tongue receiving plate 19 having a shape of an approximately circular disc and the tongue 5 is mounted on a tongue receiving face 19a of the tongue receiving plate 19 and conveyed to the tongue retrieval position. At a center of the tongue receiving plate 19, an elongated penetration hole 20 extending in a radial direction is drilled and a seatbelt 4 is slidably penetrated in the penetration hole 20. At a face opposite to the tongue receiving face 19a of the tongue receiving plate 19, an attaching portion 21 is provided at an eccentric position in the face and is attached to a tip end of the rod member 16 having the minimum diameter. In this case, the tongue receiving plate 19 is configured to extend downward from the attaching portion 21.

The tongue 5 mounted on the tongue receiving plate 19 is composed of a gripping portion 22 to be gripped by an occupant by hand, which is an arc-shaped plate having a diameter slightly larger than that of the tongue receiving plate 19, and a latching portion 23 that projects from the gripping portion 22 and is inserted and latched with the buckle 6, as shown in FIG. 3(d). In the gripping portion 22, a pair of holes 24 and 25 extending in the radial direction, positioned parallel to each other and forming a link with each other at an opposite of the gripping portion 22, shown in FIG. 3(d) is drilled. The seatbelt 4, lowered from a belt guide 7 is inserted into the hole 24 formed at a position farther from the latching portion 23 and withdrawn from the elongated hole 25 formed at a position closer to the latching portion 23, and is slidably inserted into the tongue 5.

In addition, as illustrated in FIG. 3(a) by a two-dot chain line, the tongue 5 is mounted on the tongue receiving plate 19 at the gripping portion 22 such that the latching portion 23 is directed downward. At this time, part of the gripping portion 22 between a pair of holes 24 and 25, which is closer to the elongated hole 25 is pressed to the tongue receiving plate 19 by a belt retracting force caused by a seatbelt retractor 3. Thereby, a mounting for the gripping portion to the tongue receiving plate 19 is stably operated. In addition, because the tongue receiving plate 19 has a relatively wide flat face, a mounting operation of the tongue 5 onto the tongue receiving member 18 is made stable.

Further, because a diameter of the tongue receiving plate 19 is set slightly smaller than the diameter of the gripping portion 22 of the tongue 5, the outer dimension of the tongue receiving plate 19 is smaller than that of the gripping portion 22. As a result, when the gripping portion 22 of the tongue 5 is mounted on the tongue receiving plate 19, a peripheral edge of the gripping portion 22 of the tongue 5 protrudes outward from that of the tongue receiving plate 19. Thereby, when the occupant grips the gripping portion 22 of the tongue 5 by hand, the tongue receiving plate 19 is prevented from being gripped together with the gripping portion 22.

As for the telescopic structure of the rod 17 composed of four cylindrical rods 13, 14, 15, and 16, the heretofore known telescopic structure can be used. The detailed explanation thereof is therefore omitted. In addition, the rod 17 can be set to a retracted state, shown in FIG. 2(a) and an extended state, shown in FIG. 2(b). In the retracted state of the rod 17, the tongue receiving member 18 is positioned at a storing position at the left side behind the motor vehicle seat 2, and the tongue receiving member 18 and the rod 17 do not disturb the occupant that is getting in or out of the motor vehicle. Further, in the extended state of the rod 17, the tongue receiving member 18 is positioned slightly inward of the side of the motor vehicle seat 2, as illustrated in FIG. 1(b). The tongue receiving member 18 in the extended state of the rod 17 is positioned in front of the chest or the waist of the occupant seated on the motor vehicle seat 2, namely, such that the occupant can take out the tongue 5 mounted on the tongue receiving member 18 at the tongue retrieval position by hand with ease. Further, the number of the rod members is not limited to four and is appropriately determined.

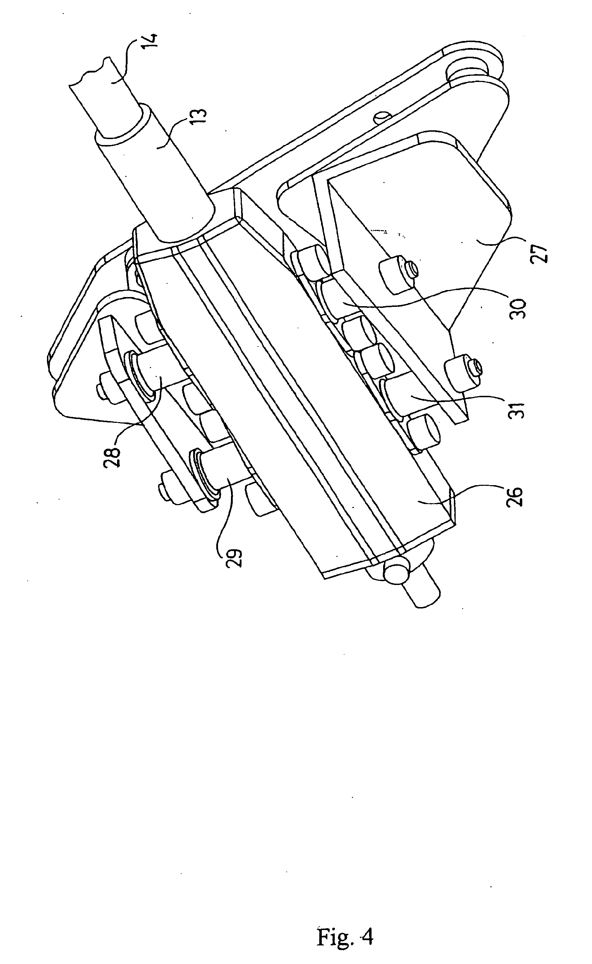

As illustrated in FIG. 4, the rod member 13 having maximum diameter is attached to an attaching bracket 26 of the rod side. The attaching bracket 26 is elastically attached to an attaching bracket 27 of the motor vehicle seat side through four rubber-mounts 28, 29, 30, and 31. In addition, the attaching bracket 27 is attached to the left side of the rear part of the motor vehicle seat 2, as illustrated in FIGs. 1(a), 2(a) and 2(b). In this case, the attaching brackets 26 of the rod side and the attaching bracket 27 of the motor vehicle seat side are attached to the motor vehicle seat 2, such that when the rod 17 is extended, the tongue receiving member 18 comes to the tongue retrieval position described above.

Further, because the rod 17 is elastically supported by the four rubber-mounts 28, 29, 30, and 31, force applied to the rod 17 itself, the tongue receiving member 18 itself, and the attaching portion of the rod 17 is buffered and a relatively large force therefore does not affect these elements even when the occupant gets into touch with the rod 17 or the tongue receiving member 18 in a state in which the rod 17 is extended and the force is applied to the rod 17 or the tongue receiving member 18. In this case, even when the force is applied to the rod 17 or the tongue receiving member 18 from any direction, force applied to the rod 17 itself, the tongue receiving member 18 itself, and the attaching portion of the rod 17 is assuredly buffered by the four rubber-mounts 28, 29, 30, and 31. In particular, when the force considered to be most frequently applied is applied to the rod 17 or the tongue receiving member 18 from inside of the motor vehicle seat 2, the force that is applied to the rod 17 itself, the tongue receiving member 18 itself, and the attaching portion of the rod 17 is more efficiently buffered.

As illustrated in FIGs. 1(a) through 1(c) and FIGs. 2(a) and 2(b), the drive section 12 is provided at a lower part of the motor vehicle seat 2. The drive section 12 is provided with a motor 32 attached to a lower part of the seat cushion 2a in the motor vehicle seat 2, a drive gear 33 to which rotation drive force of the motor 32 is transmitted with reduced speed, a flexible rod extension/retraction cable 34 , which is connected to the rod member 16 having the minimum diameter passing through an inside of the four rod members 13, 14, 15, and 16, and has teeth (not shown) constantly engaged with the drive gear 33, a cable guide 35 for guiding the rod extension/retraction cable 34 extendably provided in a slanting manner from a left side of the rear part to a right side of the front part of a lower face of the seat cushion 2a of the motor vehicle seat 2. A heretofore known power transmission structure can be used for the power transmission structure in which the rotation drive force of the motor 32 is applied to the rod extension/retraction cable 34. Accordingly, the detailed explanation is omitted.

When the motor 32 is rotated in a direction in which the rod extension/retraction cable 34 is released toward a rod 17 side, the rod 17 is extended in a telescopic fashion. On the contrary, when the motor 32 is rotated in a direction in which the rod extension/retraction cable 34 is retracted toward a cable guide 35 side, rod 17 is retracted in a telescopic fashion.

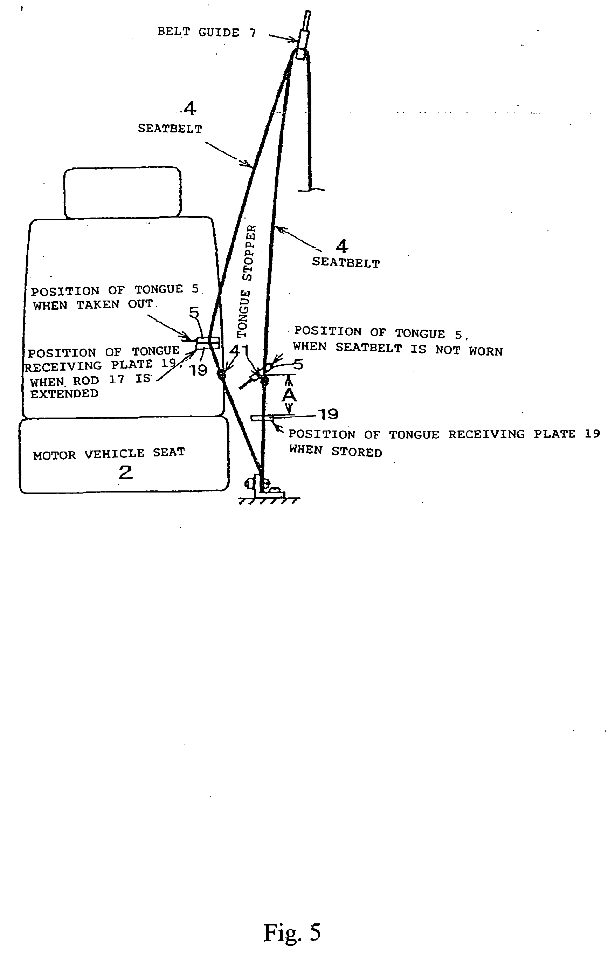

As illustrated in FIG. 5, when the seatbelt 4 is not worn, the tongue 5 gets into touch with a tongue stopper 41 and is stopped, i.e., the tongue 5 is not lowered further, similar to the case in the heretofore known seatbelt apparatus. On the other hand, when the tongue retrieval assisting device 10 is not in operation, the tongue receiving plate 19 is at the storing position. In this condition, a distance A between the position of the tongue 5 when the seatbelt 4 is not worn, and the position of the tongue receiving plate 19 at the storing position is set smaller than the extending amount of the rod 17, namely, the distance between the tongue receiving plate 19 at the storing position and the tongue receiving plate 19 at the tongue retrieval position. Thereby, when the rod 17 is extended together with the operation of the tongue retrieval assisting device 10, the tongue 5 can be assuredly received by the tongue receiving plate 19. In this case, the size of the penetration hole 20 of the tongue receiving plate 19 is set such that the tongue stopper 41 is able to smoothly pass through the penetration hole 20 while the rod 17 is extended.

Consequently, when the rod 17 is extended so that the tongue receiving member 18 is transferred from the storing position to the tongue retrieval position, the tongue receiving plate 19 of the tongue receiving member 18 conveys the tongue mounted thereupon to the tongue retrieval position.

Thus, in accordance with the tongue retrieval assisting device 10 of this embodiment, when the tongue receiving member 18 is transferred from the storing position to the tongue retrieval position for the seatbelt 4 to be worn by the occupant, the tongue 5 is conveyed to the tongue retrieval position by the tongue receiving member 18. As a result, the occupant seated on the motor vehicle seat 2 can retrieve the tongue 5 by hand with ease. Therefore, at a time when the seatbelt 4 is worn, easiness of handling the tongue 5 by the occupant can be sufficiently improved and the tongue can be assuredly retrieved.

Further, when the passenger is seated on the motor vehicle seat 2 earlier than the driver and tries to wear the seatbelt 4, the tongue 5 can be assuredly conveyed to the tongue retrieval position by setting the tongue receiving member 18 to the tongue retrieval position. Accordingly, in comparison with the case described in Japanese Registered Utility Model No. 61-176047, easiness of handling operation of the tongue 5 by the passenger can be improved and assuredness of retrieval operation of the tongue by the passenger can also be improved.

Furthermore, because the outer shape of the tongue receiving plate 19 of the tongue receiving member 18 is made smaller than that of the gripping portion 22 of the tongue 5, the peripheral edge of the gripping portion 22 of the tongue 5 projects outwardly from the peripheral edge of the tongue receiving plate 19 when the gripping portion 22 of the tongue 5 is mounted on the tongue receiving plate 19. As a result, the occupant can grip the gripping portion 22 by hand without gripping the tongue receiving plate 19 together when the occupant grips the gripping portion 22 of the tongue 5. Accordingly, the tongue 5 can be further easily and assuredly retrieved.

Moreover, because the rod 17 is elastically supported by four rubber-mounts 28, 29, 30, and 31, even when a force is applied to these rods or the tongue receiving member 18 resulting, e.g., from that the occupant gets into touch with the rod 17, or the tongue receiving member 18, or the like, the force applied to the rod 17 itself, tongue receiving member 18 itself, and the attaching portion of the rod 17 can be buffered to be smaller by the rubber-mounts 28, 29, 30, and 31. In this case, even when force is applied to the rod 17 or the tongue receiving member 18 from any direction, the force applied to the rod 17 itself, tongue receiving member 18 itself, and the attaching portion of the rod 17 is assuredly buffered and suppressed by the four rubber-mounts 28, 29, 30, and 31. In particular, when the force, considered to be most frequently applied, is applied to the rod 17 or the tongue receiving member 18 from inside of the motor vehicle seat 2, the force applied to the rod 17 itself, tongue receiving member 18 itself, and the attaching portion of the rod 17 is further effectively buffered.

Furthermore, because the tongue retrieval assisting device 10 is attached to the motor vehicle seat 2, even when the position of the motor vehicle seat 2 is adjusted in back-and-front direction by the occupant, the tongue retrieval assisting device 10 is moved together with the back-and-front movement of the motor vehicle seat 2. Therefore, the tongue retrieval position relative to the motor vehicle seat 2 is not changed and the tongue retrieval position relative to the occupant seated on the motor vehicle seat 2 is kept approximately constant.

Furthermore, by applying the tongue retrieval assisting device 10 of this embodiment to the seatbelt apparatus, the simplicity of the inserting and latching operation for the tongue 5 with the buckle 6 is improved and the seatbelt 4 can thereby be easily worn by the occupant.

Meanwhile, in the tongue retrieval assisting device 10 of this embodiment, a tongue retrieval system is configured such that the tongue receiving member 18 is automatically set to the tongue retrieval position and the storing position by extending or retracting the rod 17 by controlling the rotation of the motor 32 with an electronic controller (not shown).

In the tongue retrieval system of this embodiment, a tongue retrieval sensor 36 that detects that the tongue 5 is retrieved from the tongue receiving member 18 by the occupant and outputs a tongue retrieval signal, is provided in the tongue receiving member 18, as illustrated in FIG. 3(a).

Further, although not shown, a seating sensor for detecting that the occupant is seated on the motor vehicle seat 2 is provided in the motor vehicle seat 2 and a door sensor for detecting opening or closing of the door is provided in the door. In addition, when the rod 17 is fully extended, the tongue receiving member 18 is arranged at the tongue retrieval position and when the rod 17 is fully retracted, the tongue receiving member 18 is arranged at the storing position. Further, a rod full extension sensor for detecting the maximum extension of the rod 17, and a rod full retraction sensor for detecting that the rod 17 is retracted to have its smallest length are provided in the rod 17. For these sensors, the heretofore known sensors can be used and the detailed explanation is omitted.

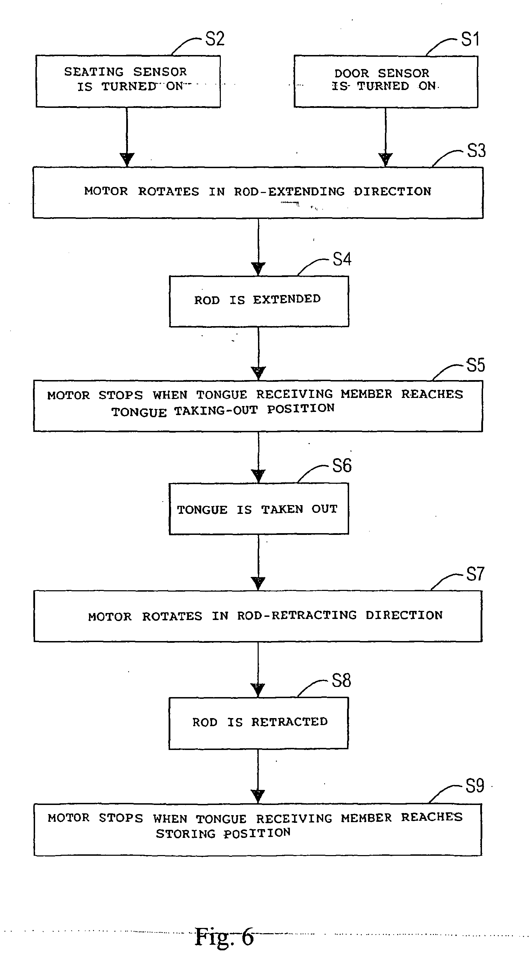

Furthermore, in the tongue retrieval system of this embodiment, the tongue receiving member 18 is automatically set at the tongue retrieval position or the storing position when a controller controls the drive of the motor 32 according to a flowchart showing the control of the motor drive, as illustrated in FIG. 6.

That is, as illustrated in FIG. 6, according to a door closing signal from the door sensor indicating that the door is closed in Step S1, and the seating signal from the seating sensor indicating that the occupant is seated in Step S2, the controller controls the motor 32 to rotate in a direction in which the rod 17 is extended in Step S3. Then, the rod is extended in Step S4. The motor 32 is stopped by the controller on the basis of the rod full extension signal from the rod full extension sensor, indicating that the rod 17 is extended to the maximum length and the tongue receiving member 18 reaches the tongue retrieval position in Step S5. On the other hand, the tongue 5 conveyed to the tongue retrieval position by the tongue receiving member 18 is retrieved by the occupant in Step S6, and the controller controls the motor 32 to rotate in a reverse direction, namely in a direction for retracting the rod 17, on the basis of the tongue retrieval signal output from the tongue retrieval sensor 36 in Step S7. Then, the rod 17 is retracted in Step S8. The controller stops rotation of the motor 32 on the basis of a rod full retraction signal from the rod full retraction sensor indicating that the rod 17 is retracted to have its shortest length, and the tongue receiving member 18 reaches the storing position in Step S9.

According to the tongue retrieval system of this embodiment, the rod 17 is retracted when the tongue 5 is retrieved from the tongue receiving member 18 by the occupant. Therefore, at a time when the tongue is inserted and latched with the buckle 6, the rod 17 is retracted and the tongue receiving member 18 is positioned at the storing position or the position adjacent to the storing position. Accordingly, when the occupant has completed latching the tongue 5 with the buckle 6 and takes off a hand from the seatbelt 4 and the tongue 5, the seatbelt 4 can be adjusted to properly tighten the seatbelt to the occupant and thereby preventing the occupant from sensing the discomfort.

Further, unless the occupant assuredly takes out the tongue 5 from the tongue receiving member 18, the tongue receiving member 18 is not transferred to the storing position behind the motor vehicle seat 2. By the aforementioned configuration, easiness of handling operation of the tongue 5 performed by the occupant can be further improved and assuredness of retrieval operation of the tongue 5 performed by the occupant can be improved.

Furthermore, because the rod 17 starts to extend on the basis of two signals of the door-close signal from the door sensor and the seating signal from the seating sensor, the rod 17 can start to extend only when the occupant is seated on the motor vehicle seat 2 and the door is closed. Thereby, even when the door is opened and closed while the occupant is not seated on the motor vehicle seat 2, the rod 17 can be prevented from being extended, and even when the occupant seated on the motor vehicle seat 2 changes his/her own seating posture (driving posture or riding posture) to take something or the like, while the door is closed, the rod 17 can be also prevented from extending, resulting in preventing a needless extension of the rod 17.

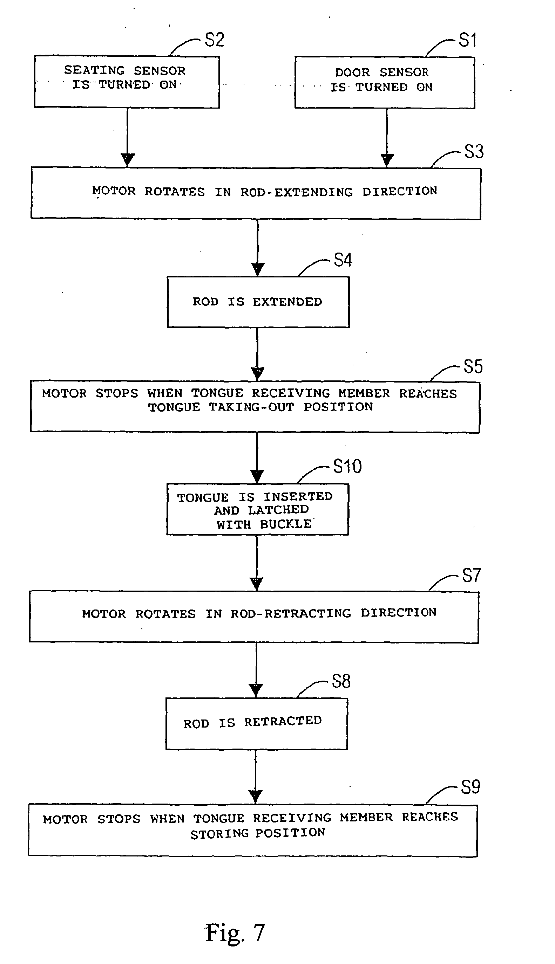

FIG. 7 is a flowchart showing a control of the motor drive of the tongue retrieval system of a background example which is not an embodiment.

In the above-described flowchart illustrated in FIG. 6, the controller controls the motor 32 to rotate in the direction for retracting the rod 17 via the tongue retrieval signal from the tongue retrieval sensor 36 indicating that the tongue 5 is retrieved from the tongue receiving member 18. However, in the tongue retrieval system of this example, instead of the tongue retrieval sensor 36 a buckle switch (not shown) is used, as illustrated in FIG.7. The buckle switch detects that the tongue 5 is inserted and latched with the buckle 6 and outputs the tongue latching signal. As for the buckle switch, the heretofore known buckle switch can be used and the detailed explanation is therefore omitted.

That is, similar to the above-described embodiment shown in FIG. 6, the tongue receiving member 18 reaches the tongue retrieval position and the motor 32 is stopped, in Step S5. Thereafter, the tongue 5 mounted on the tongue receiving member 18 is conveyed to the tongue retrieval position and the tongue 5 retrieved by the occupant is inserted and latched with the buckle 6, in Step S10. Then, the buckle switch detects that the tongue 5 is inserted and latched with the buckle 6 and outputs a tongue latching signal. The controller controls the motor 32 to rotate in a direction for retracting the rod 17, on the basis of the tongue latching signal from the buckle switch in Step S7, in the same manner as in the above-mentioned embodiment shown in FIG. 6.

The other flows and steps in the motor drive control as described in FIG.7 are the same as in the above-described embodiment, shown in FIG. 6.

In the tongue retrieval system of this example, the tongue receiving member 18 is kept at the tongue retrieval position until the tongue 5 is inserted and latched with the buckle 6. Accordingly, the tongue receiving member 18 is not yet transferred to the storing position even when the tongue 5 is retrieved from the tongue receiving member 18 by the occupant. Namely, the effect from S6 in FIG. 6 is not obtained. However, the other effects are the same as the ones shown in FIG. 6.

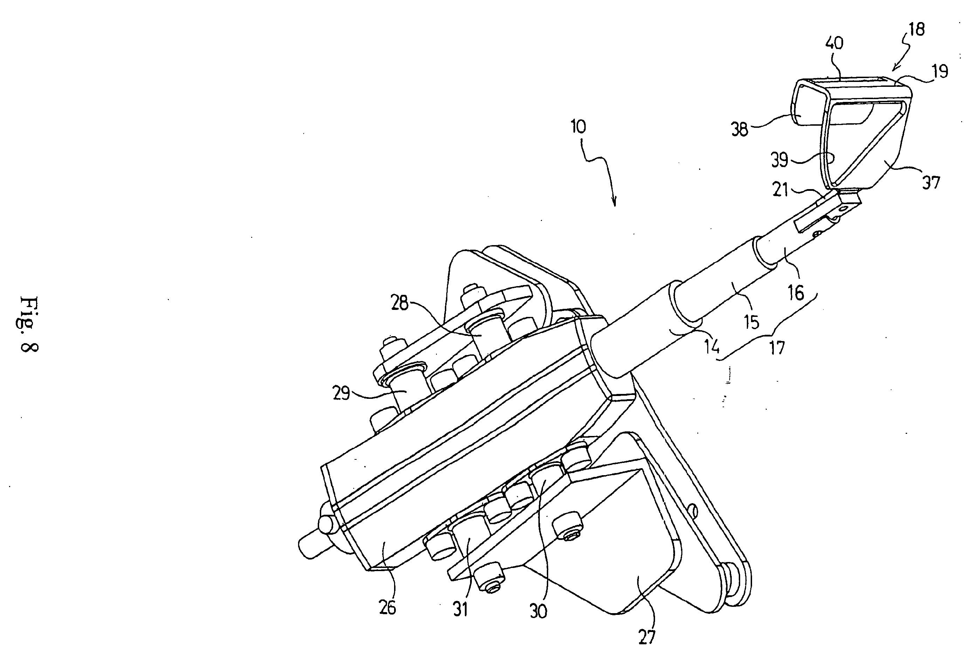

FIG. 8 is a perspective view partially illustrating another embodiment of the tongue retrieval assisting device used in the tongue retrieval system of the present invention.

In the above-described embodiment, the telescopically retractable rod 17 is composed of the four rod members 13, 14, 15, and 16. However, in the tongue retrieval assisting device 10 of this embodiment shown in FIG. 8, the rod 17 is composed of three rod members 14, 15, and 16 in a telescopically retractable fashion. Accordingly, the rod 14 having the maximum diameter is attached to the attaching bracket 26 of the rod side.

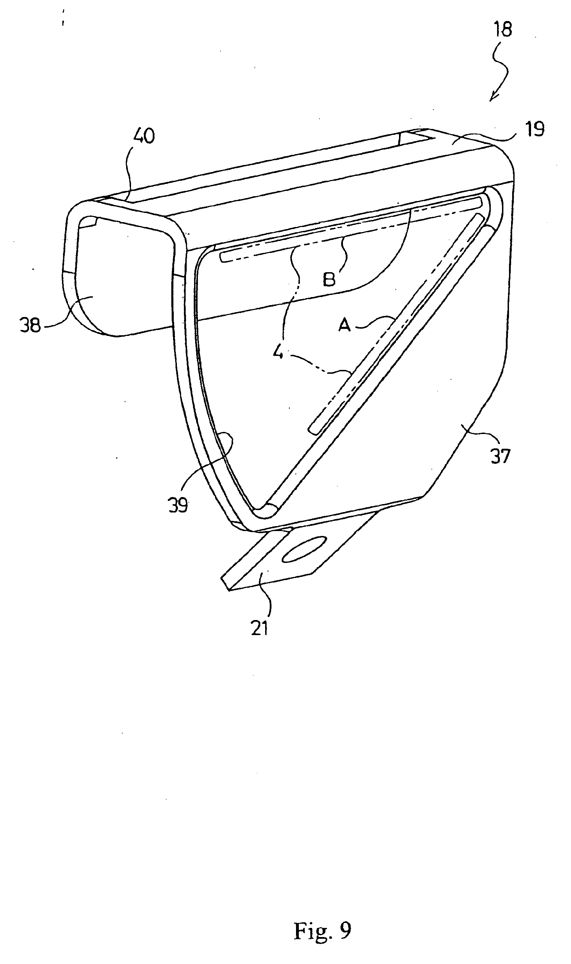

Further, in the above-described embodiment, as illustrated in FIGs. 3(a) through 3(c), the tongue receiving member 18 is provided with a tongue receiving plate 19 having an approximately circular shape. However, as illustrated in FIG. 8, in the tongue retrieval assisting device of this embodiment, the tongue receiving member 18 of this embodiment has an approximately U-shape, looking from side. In the detailed explanation, the tongue receiving member 18 is composed of a long side wall 37 having a relatively large length, a short side wall 38 having a relatively small length, and a tongue receiving plate 19 having a flat and an approximately rectangular shape for joining the side walls 37 and 38, which are formed together into an approximate U-shape, looking from a side, as illustrated in FIG. 9.

The long side wall 37 is provided with an attaching portion 21 at a lower part thereof, and similar to the above-described embodiment, the attaching portion 21 is attached to a tip end of the rod member 16 having the minimum diameter. In addition, at the lower end of the long side wall, a penetration hole 39 which is a relatively large sectorial shape is formed such that the seatbelt 4 slidably penetrates therethrough. When the tongue receiving member 18 is transferred from the storing position to the tongue retrieval position, the seatbelt 4 penetrates the penetration hole 39 from a state with its face in an inclined state shown by a mark A, to in an approximately horizontal state shown by a mark B. On the other hand, when the tongue receiving member 18 is transferred from the tongue retrieval position to the storing position, the seatbelt 4 penetrates the penetration hole 39 from a state with its face in an approximately horizontal state shown by a mark B, to in an inclined state shown by a mark A. Therefore, at the time when the tongue receiving member 18 is transferred, the inclination of the face of the seatbelt 4 can be smoothly changed by thus forming the penetration hole 39 into the sectorial shape.

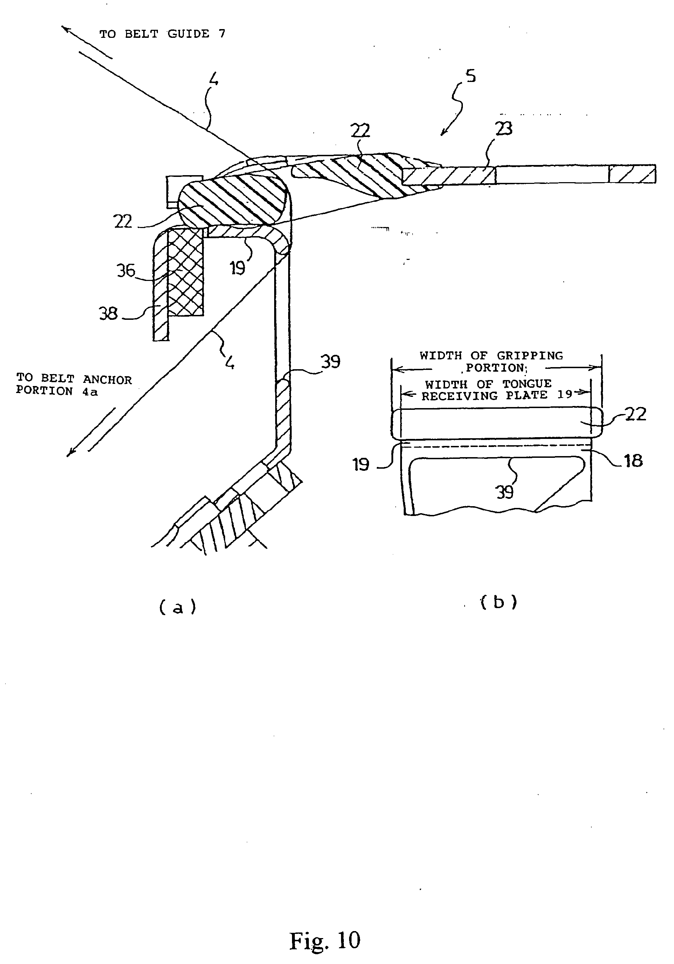

The width (the length in a belt-width direction) of the tongue receiving plate 19 having a rectangular shape is set smaller than the width (the length in a belt-width direction) of the gripping portion 22. Therefore, as illustrated in FIG. 10(a), in a state in which the tongue receiving member 18 is set at the tongue retrieval position and the gripping portion 22 of the tongue 5 is mounted on the tongue receiving plate 19a as illustrated in FIG. 10(a), a left-and-right edge of the gripping portion 22 projects outside of the left-and-right edge of the tongue receiving plate 19, as illustrated in FIG. 10(b). As a result, similar to the above-described embodiment, when the occupant grips the gripping portion 22 of the tongue 5, the tongue receiving plate 19 is prevented from being gripped together with the gripping portion 22.

Furthermore, in a state in which the gripping portion 22 of the tongue 5 is mounted on the tongue receiving plate 19 shown in FIG. 10(a), the gripping portion 22 is pressed onto the relatively wide and flat tongue receiving face 19a of the tongue receiving plate 19 by belt-retracting force of the seatbelt retractor 3. Accordingly, similar to the above-described embodiment, the gripping portion 22 is assuredly mounted onto the tongue receiving plate 19 and the tongue 5 is stably mounted onto the tongue receiving member 18.

Furthermore, in the tongue receiving plate 19, an attaching hole 40 which has a rectangular shape and penetrates from above to below is drilled. As illustrated in FIG. 10(a), in the attaching hole 40, a tongue retrieval sensor 36 is mounted. In a state in which the tongue receiving member 18 is set to the tongue retrieval position, whereas the tongue 5 is not retrieved by the occupant yet and is mounted on the tongue receiving plate 19 of the tongue receiving member 18, the gripping portion 22 of the tongue 5 is in contact with the tongue retrieval sensor 36, and the tongue retrieval sensor 36 does not output the tongue retrieval signal. When the tongue 5 is retrieved by the occupant, because the gripping portion 22 is released from the tongue retrieval sensor 36, the tongue retrieval sensor 36 outputs the tongue retrieval signal.

In accordance with the tongue retrieval assisting device 10 of this embodiment in which the tongue receiving plate 19 is formed into a rectangular shape, a gripping portion having a rectangular shape of the heretofore known, and commonly used tongue can be effectively mounted on a tongue receiving plate 19 fitting with the rectangular shape of the tongue receiving plate 19. As a result, it is not necessary to form the gripping portion 22 of the tongue 5 into a special shape and the tongue receiving plate 19 is applicable for the heretofore known commonly used tongue.

The other configurations and effects of this embodiment are the same as the ones of the above-described embodiment. In addition, the other configurations and effects of the seatbelt apparatus using the tongue retrieval assisting device 10 of this embodiment are the same as the ones of the above-described embodiment.

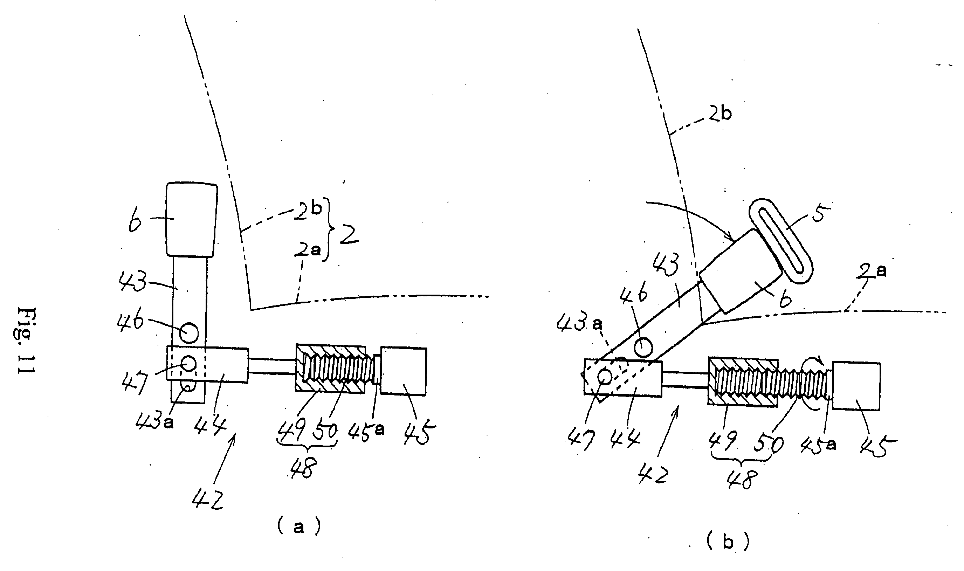

FIGs. 11(a) and 11(b) illustrate still another embodiment of the present invention. FIG. 11(a) is an illustration, showing a state in which a buckle 6 is in the storing position, and FIG. 11(b) is an illustration, showing a state in which the buckle 6 is used.

As illustrated in FIGs. 11(a) and 11(b), in the seatbelt apparatus 1 of this embodiment, the buckle 6 is also configured to be movable between the storing position and the using position whereas the position of the buckle 6 is fixed in each of the above-described embodiments. That is, a buckle device 42 includes a buckle 6, a supporting lever 43 connected to the buckle 6, a lever rotating member 44, and a motor 45 (corresponding to a buckle drive device of the present invention) for driving the lever rotating member 44.

The supporting lever 43 is attached to the motor vehicle seat 2 or the body of the vehicle with a rotation shaft 46 such that the supporting lever 43 can rotate in a front-and-back direction of the motor vehicle. At an opposite side of the buckle 6 relative to the rotation shaft 46 of the supporting lever 43, an elongated hole 43a extending in a longitudinal direction is drilled. Because a connecting pin 47 is slidably provided to penetrate the elongated hole 43a, the supporting lever 43 and the lever rotating member 44 are rotatably and movably connected with each other.

An end of the lever rotating member 44 opposite to a connecting portion with the supporting lever 43 is connected to a rotation shaft 45a of the motor 45 by a screw-type retraction/extension mechanism 48. The screw-type retraction/extension mechanism 48 is composed of an internal thread member 49 fixed to the lever rotating member 44, and an external thread member 50 formed on the rotation shaft 45a and screwed together with the internal thread member 49. In addition, the external thread member 50 can also be formed separately from the rotation shaft 45a and connected to the rotation shaft 45a.

When the rotation shaft 45a of the motor 45 rotates and the external thread member 50 rotates in the same direction, the internal thread member 49 reversibly moves responsive to the rotational direction of the motor 45 in a left-and-right direction in FIGs. 11(a) and 11(b). Thereby, the screw-type retraction/extension mechanism 48 retracts or extends. The motor 45 and the screw-type retraction/extension mechanism 48 are disposed inside the seat cushion 2a of the motor vehicle seat 2, or at a lower part of the seat cushion 2a.

Further, as illustrated in FIG. 11(a), when the buckle is not used, the screw-type retraction/extension mechanism 48 is fully retracted and the supporting lever 43 is brought into a state of standing in an approximately vertical direction, and the buckle 6 is set to the storing position stored in the seatback 2b of the motor vehicle seat 2. In addition, as illustrated in FIG. 11(b), when the buckle 6 is in use, the screw-type retraction/extension mechanism 48 is fully extended and the lever rotating member 44 rotates the supporting lever 43 around the rotation shaft 46 in a clockwise direction. When the supporting lever 43 is rotating, the connecting pin 47 slides along the elongated hole 43a formed in the supporting lever 43. Then, the buckle 6 passes through an inlet/outlet for the buckle (not shown) which is formed in the seatback 2b of the motor vehicle seat 2, and advances to the side of the motor vehicle seat 2 to be set at a using position. Thereafter, when the motor 45 is stopped, the buckle 6 is locked at the using position by screwing the external thread 49 and the internal thread 50. A buckle transfer device of the present invention is thus configured by the supporting lever 43, the lever rotating member 44, the rotation shaft 46, and the connecting pin 47.

The motor 45 of the buckle device 42 at the storing position is controlled to be driven by an electronic controller in conjunction with driving the motor 32 of the tongue retrieval assisting device 10, when the motor 32 is controlled to be driven by the electronic controller so that the tongue receiving plate 19 is transferred from the storing position to the tongue retrieval position. As a result, the tongue 5 is conveyed to the tongue retrieval position and the buckle 6 is transferred to the using position. Accordingly, both the tongue retrieval assisting device 10 and the buckle 6 do not disturb the occupant when the seatbelt 4 is not used, and the occupant is enabled to insert the tongue 5 into the buckle 6 and latch the tongue 5 with the buckle 6 with ease when the seatbelt 4 is used. Further, the transferring operation for the buckle 6 from the using position to the storing position can be performed such that, for example, the buckle switch turns off when the tongue 5 is released from the buckle 6 and the motor 32 is driven to transfer the buckle 6 from the using position to the storing position.

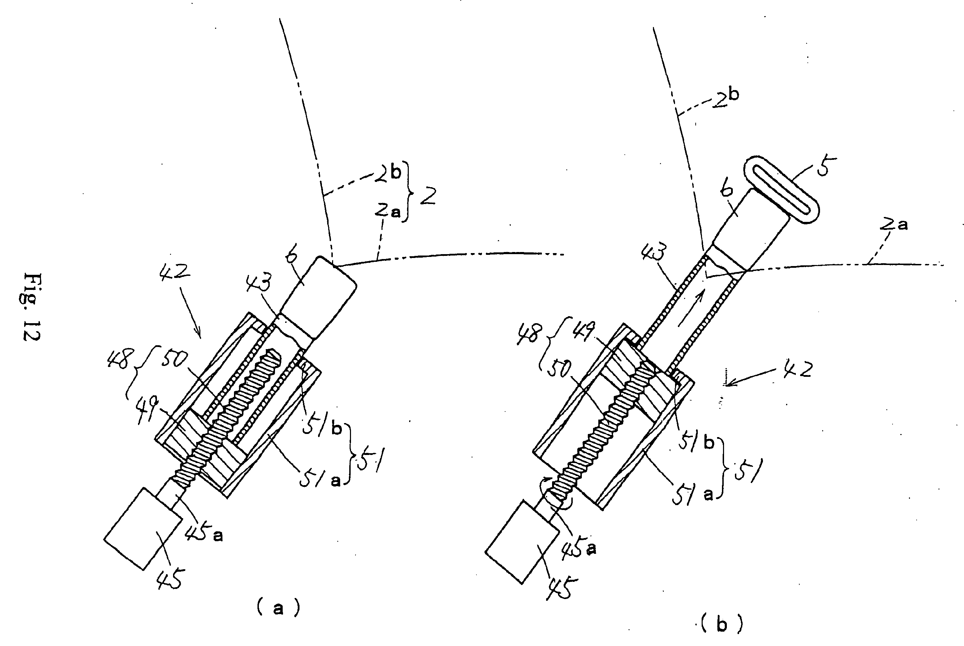

FIGs. 12(a) and 12(b) illustrate still another embodiment of the present invention, each of which is similar to FIGs. 11(a) and 11(b).

In the embodiment illustrated in FIGs. 11(a) and 11(b), the buckle 6 is selectively set to the storing position or the using position by the rotational movement of the supporting lever 43. However, in this embodiment as illustrated in FIGs. 12, the buckle 6 is selectively set to the storing position or the using position by a linear movement of the supporting member 43.

That is, as illustrated in FIGs. 12(a) and 12(b), in the buckle device 42 of this embodiment, the screw-type retraction/extension mechanism 48 is composed of the internal thread member 49 and the external thread member 50 formed on the rotation shaft 45a and screwed with the internal thread member 49. The cylindrically shaped supporting lever 43 that supports the buckle 6 is connected to the internal thread member 49. The internal thread member 49 is provided in a cylindrically shaped guiding/limiting member 51 fixed to the motor vehicle seat 2 or the body of the vehicle. In this case, the guiding/limiting member 51 is provided with a guiding portion 51a to guide the internal thread member 49 so that it is unable to rotate and is movable in a longitudinal direction of the guiding/limiting member 51, and a transfer limitation portion 51b limiting a movement of the buckle 6 in a direction advancing toward the seat cushions 2a and 2b side when the buckle 6 is arranged in the using position.

When the rotation shaft 45a of the motor 45 rotates and the external thread member 50 rotates in the same direction, the internal thread member 49 reversibly moves along an axial direction of the rotation shaft 45a in response to the rotating direction of the motor 45. Thereby, the screw-type retraction/extension mechanism 48 retracts or extends. Consequently, the supporting lever 43 is advanced from the guiding/limiting member 51 or accommodated therein.
A buckle transfer device of the present invention is composed of the supporting lever 43, the screw-type retraction/extension mechanism 48, and the guiding/limiting member 51.

Further, similar to the buckle device 42 of the above described embodiment, in the buckle device 42 of this embodiment, both the storing position, shown in FIG. 12(a), in which the buckle 6 is concealed with the motor vehicle seat 2 and the using position, shown in FIG. 12(b), in which the buckle 6 is advanced from the storing position to a side of the seat cushions 2a and 2b of the motor vehicle seat 2 is set.

Furthermore, in the buckle device 42 of this embodiment, different from the above-described embodiment, the supporting lever 43 performs a linear movement and does not perform a rotational movement. As a result, the movement of the supporting lever is stable, and the storing position and the using position of the buckle 6 are further assuredly set. In this case, when the buckle 6 is at the using position, the internal thread member 49 fixed to the supporting member 43 gets into contact with the transfer limitation portion 51b, and thereby the buckle is locked in a direction in which the buckle is advanced toward the seat cushions 2a and 2b side and is limited to move in the above-mentioned direction.

Furthermore, in a state in which the occupant wears the seatbelt 4 inserting and latching the tongue 5 with the buckle 6, for example, when a tension force is applied to the buckle 6 through the seatbelt 4 and the tongue 5 by a forward movement of the occupant due to inertia or the like, caused by a great deceleration of the motor vehicle, the force is assuredly received by the guiding/limiting member 51 through the supporting lever 43 and the internal thread member 49.

The other configurations and effects of the buckle device 42 of this embodiment are substantially the same as of the ones shown in FIG. 11(a) and 11(b).

According to further background examples which are no embodiments, the tongue retrieval sensor 36 or the buckle switch for detecting the retrieval operation of the tongue, which are used as an output device for outputting a trigger signal so as to rotate the motor 32 in the direction for retracting the extended rod 17, do not always need to be provided and may be omitted. In this case, the rotation of the motor can be started by manual switching. However, in consideration of easiness of handling operation of the tongue 5 or wearability for the seatbelt 4, it is preferable to automatically transfer the tongue receiving member 18 between the storing position and the tongue retrieval position as mentioned in each of the above-described embodiments.

Furthermore, both the elongated penetration hole 20 for slidably penetrating the seatbelt 4, shown in FIG. 3(b), and the sectorial penetration hole 39, shown in FIG. 9, are formed into a closed end. However, when a part of these penetration holes 20 and 39 has an opening outwardly, the seatbelt 4 can also be thereby inserted through the opening into these penetration holes 20 and 39 with ease. This allows easy insertion for the seatbelt 4 into the penetration holes 20 and 39.

Furthermore, in the above-described embodiment, the tongue retrieval assisting device 10 is attached to the motor vehicle seat 2. However, the present invention is not limited to this configuration and the tongue retrieval assisting device 10 can be also provided in a floor portion of the body of the vehicle, or the like.

A tongue retrieval system and a seatbelt apparatus using the tongue retrieval system may be installed on motor vehicles such as an automobile or the like, and are provided for protecting an occupant by restraining the occupant with the seatbelt. This invention is also preferably applicable to the seatbelt apparatus in which the seatbelt is worn by the occupant seated on a motor vehicle seat by inserting and latching the tongue slidably supported by the seatbelt into the buckle fixed on a body of a vehicle.

## Claims

1. A tongue retrieval system conveying a tongue (5) slidably supported by a seatbelt (4) to a tongue retrieval position set in front of an occupant seated on a motor vehicle seat (2), comprising:
a tongue receiving member (18) on which the tongue (5) is mounted for conveying the tongue (5) to the tongue retrieval position;
a transfer device (17) for transferring the tongue receiving member (18) between a storing position and the tongue retrieval position;
a drive device (32) for driving the transfer device (17);
a controller for controlling the drive device (32);
a seating sensor for detecting the occupant seated on the motor vehicle seat (2) and for outputting a seating signal;
a door sensor for outputting a door-close signal when the door of a motor vehicle is closed; and
a tongue retrieval sensor (36) for outputting a tongue retrieval signal,
wherein the controller controls the drive device (32) such that the transfer device (17) transfers the tongue receiving member (18) from the storing position to the tongue retrieval position on a basis of the seating signal from the seating sensor and the door-close signal from the door sensor, and
such that the transfer device (32) transfers the tongue receiving member (18) from the tongue retrieval position to the storing position on the basis of the tongue retrieval signal from the tongue retrieval sensor (36),
**characterized in that**
said tongue retrieval sensor (36) is provided in the tongue receiving member (18) and outputs said tongue retrieval signal when the tongue (5) is retrieved from the tongue receiving member (18).

2. A seatbelt apparatus, comprising at least:
a seatbelt (4) for restraining an occupant;
a seatbelt retractor (3) mounted on a motor vehicle for constantly biasing the seatbelt (4) in a direction for retracting the seatbelt (4);
a tongue (5) slidably supported by the seatbelt (4);
and a buckle (6) mounted on the motor vehicle, with which the tongue is inserted and latched,
wherein the seatbelt apparatus includes the tongue retrieval system (10) of Claim 1.

3. The seatbelt apparatus according to Claim 2, comprising:
a buckle transfer device (43, 44, 46, 47; 43, 48, 51) for transferring the buckle (6) between a storing position and a using position in which the buckle (6) is latched with the tongue (5) by the occupant;
a buckle drive device (45) for driving the buckle transfer device (43, 44, 46, 47; 43, 48, 51);
a controller for controlling the buckle drive device (45) such that the buckle (6) is transferred from the storing position to the using position in which the buckle (6) is latched with the tongue (5) by the occupant, in conjunction with a driving operation of the drive device (32) for driving the transfer device (17), when the drive device (32) for driving the transfer device (17) for transferring the tongue receiving member (18) is driven such that the tongue receiving member (18) is transferred from the storing position to the tongue retrieval position.

## Patentansprüche

1. Zungenentnahmesystem, welches eine von einem Sitzgurt (4) gleitend gehaltene Zunge (5) in eine Zungenentnahmeposition vor einem auf einem Kraftfahrzeugsitz (2) sitzenden Insassen befördert, umfassend:
ein Zungenaufnahmeelement (18), an welchem die Zunge (5) zum Befördern der Zunge (5) zu der Zungenentnahmeposition angebracht ist;
eine Übertragungsvorrichtung (17) zum Übertragen des Zungenaufnahmeelements (18) zwischen einer Aufbewahrungsposition und der Zungenentnahmeposition;
eine Antriebsvorrichtung (32) zum Antreiben der Übertragungsvorrichtung (17);
eine Steuerung zum Steuern der Antriebsvorrichtung (32);
einen Sitzsensor zum Erfassen eines Insassen, welcher auf dem Kraftfahrzeugsitz (2) sitzt, und zum Ausgeben eines Sitzsignals;
einen Türsensor zum Ausgeben eines Türschließ-Signals, wenn die Tür eines Kraftfahrzeugs geschlossen wird; und
einen Zungenentnahmesensor (36) zum Ausgeben eines Zungenentnahmesignals,
wobei die Steuerung die Antriebsvorrichtung (32) derart steuert, dass die Übertragungsvorrichtung (17) das Zungenaufnahmeelement (18) von der Aufbewahrungsposition zu der Zungenentnahmeposition auf der Grundlage des Sitzsignals von dem Sitzsensor und des Türschließ-Signals von dem Türsensor überträgt und die Übertragungsvorrichtung (17) das Zungenaufnahmeelement (18) von der Zungenentnahmeposition zu der Aufbewahrungsposition auf der Grundlage des Zungenentnahmesignals von dem Zungenentnahmesensor (36) überträgt,
**dadurch gekennzeichnet, dass**
der Zungenentnahmesensor (36) in dem Zungenaufnahmeelement (18) vorgesehen ist und das Zungenentnahmesignal ausgibt, wenn die Zunge (5) von dem Zungenaufnahmeelement (18) entnommen wird.

2. Sitzgurtvorrichtung, zumindest umfassend:
einen Sitzgurt (4) zum Zurückhalten eines Insassen;
eine Sitzgurtaufwickelvorrichtung (3), welche an einem Kraftfahrzeug zum ständigen Vorspannen des Sitzgurts (4) in einer Aufwickelrichtung des Sitzgurts (4) vorspannt;
eine Zunge (5), welche von dem Sitzgurt (4) verschiebbar gehalten wird; und
ein Gurtschloss (6), welches an dem Kraftfahrzeug angebracht ist, und in welches die Zunge eingesetzt wird, und mit welchem die Zunge verriegelt wird,
wobei die Sitzgurtvorrichtung das Zungenentnahmesystem (10) nach Anspruch 1 aufweist.

3. Sitzgurtvorrichtung nach Anspruch 2, umfassend:
eine Gurtschlossübertragungsvorrichtung (43, 44, 46, 47; 43, 48, 51) zum Übertragen des Gurtschlosses (6) zwischen einer Aufbewahrungsposition und einer Benutzungsposition, in welcher das Gurtschloss (6) mit der Zunge (5) von dem Insassen verriegelt wird;
eine Gurtschlossantriebsvorrichtung (45) zum Antreiben der Gurtschlossübertragungsvorrichtung (43, 44, 46, 47; 43, 48, 51);
eine Steuerung zum Steuern der Gurtschlossantriebsvorrichtung (45) derart, dass das Gurtschloss (6) von der Aufbewahrungsposition zu der Benutzungsposition, in welcher das Gurtschloss (6) mit der Zunge (5) von dem Insassen verriegelt wird, in Verbindung mit einem Antriebsvorgang der Antriebsvorrichtung (32) zum Antreiben der Übertragungsvorrichtung (17) übertragen wird, wenn die Antriebsvorrichtung (32) zum Antreiben der Übertragungsvorrichtung (17) zum Übertragen des Zungenaufnahmeelements (18) derart angetrieben wird, dass das Zungenaufnahmeelement (18) von der Aufbewahrungsposition zu der Zungenentnahmeposition übertragen wird.

## Revendications

1. Système de présentation d'une languette pour effectuer le transfert d'une languette (5) supportée de façon glissante par une ceinture de sécurité (4) jusqu'à une position de présentation de languette située devant un occupant assis dans un siège de véhicule automobile (2), comprenant :
un organe de réception de languette (18) sur lequel est monté la languette (5) pour transporter la languette (5) jusqu'à la position de présentation de languette ;
un dispositif de transfert (17) pour transférer l'organe de réception de languette (18) entre une position de stockage et la position de présentation de languette ;
un dispositif d'entraînement (32) pour entraîner le dispositif de transfert (17) ;
une unité de commande pour commander le dispositif d'entraînement (32) ;
un capteur de position assise, pour détecter la présence de l'occupant assis dans le siège de véhicule automobile (2) et pour sortir un signal de position assise ;
un capteur de portière pour sortir un signal de la fermeture de portière lorsque la portière de véhicule automobile est fermée ; et
un capteur de présentation de languette (36) pour sortir un signal de présentation de languette,
dans lequel l'unité de commande effectue la commande du dispositif d'entraînement (32) de sorte que le dispositif de transfert (17) effectue le transfert de l'organe de réception de languette (18) à partir de la position de stockage jusqu'à la position de présentation de languette sur la base du signal de position assise fourni par le capteur de position assise ainsi que le signal de fermeture de portière fourni par le capteur de portière, et
de sorte que le dispositif de transfert (17) effectue le transfert de l'organe de réception de languette (18) à partir de la position de présentation de languette jusqu'à la position de stockage sur la base du signal de présentation de languette fourni par le capteur de présentation de languette (36),
**caractérisé en ce que**
ledit capteur de présentation de languette (36) est prévu dans l'organe de présentation de languette (18) et fournit en sortie ledit signal de présentation de languette lorsque la languette (5) est récupérée à partir de l'organe de réception de languette (18).

2. Un dispositif formant ceinture de sécurité, comprenant au moins :
une ceinture de sécurité (4) pour retenir un occupant ;
un enrouleur de ceinture de sécurité (3) monté sur un véhicule automobile pour solliciter en permanence la ceinture de sécurité (4) dans un sens tendant à rétracter la ceinture de sécurité (4) ;
une languette (5) supportée de façon glissante par la ceinture de sécurité (4) ;
et une attache de ceinture de sécurité (6) montée sur le véhicule automobile, permettant l'insertion de la languette et son verrouillage,
dans lequel le dispositif formant ceinture de sécurité comprend le système de présentation de languette (10) de la revendication 1.

3. Le dispositif formant ceinture de sécurité selon la revendication 2, comprenant :
un dispositif de transfert d'attache de ceinture de sécurité (43, 44, 46, 47 ; 43, 48, 51) pour transférer l'attache de ceinture de sécurité (6) entre une position de stockage et une position d'utilisation dans laquelle l'attache de ceinture de sécurité (6) est verrouillée avec la languette (5) par l'occupant ;
un dispositif d'entraînement d'attache de ceinture de sécurité (45) pour entraîner le dispositif de transfert d'attache de ceinture de sécurité (43, 44, 46, 47 ; 43, 48, 51) ;
une unité de commande pour commander le dispositif d'entraînement d'attache de ceinture de sécurité (45) de sorte que l'attache de ceinture de sécurité (6) soit transférée à partir de la position de stockage jusqu'à la position d'utilisation dans lequel l'attache de ceinture de sécurité (6) est verrouillée avec la languette (5) par l'occupant, en association avec une opération d'entraînement du dispositif d'entraînement (32) pour entraîner le dispositif de transfert (17), lors de l'entraînement du dispositif d'entraînement (32) pour entraîner le dispositif de transfert (17) pour le transfert de l'organe de réception de languette (18) de sorte que l'organe de réception de languette (18) soit transféré à partir de la position de stockage jusqu'à la position de présentation de languette.
